(19) Europäisches Patentamt / European Patent Office / Office européen des brevets

(11) **EP 3 270 208 B1**

(12) **FASCICULE DE BREVET EUROPEEN**

(45) Date de publication et mention de la délivrance du brevet:
**06.03.2024 Bulletin 2024/10**

(21) Numéro de dépôt: **16305894.4**

(22) Date de dépôt: **12.07.2016**

(51) Classification Internationale des Brevets (IPC):
**G02B 27/01** *(2006.01)*  **G02C 7/02** *(2006.01)*
**G02C 7/06** *(2006.01)*  *A61F 9/02 (2006.01)*

(52) Classification Coopérative des Brevets (CPC):
**G02B 27/0172; G02C 7/02; G02C 7/061;**
G02B 2027/0178

(54) **PROCÉDÉ DE FOURNITURE D'UN DISPOSITIF D'AFFICHAGE POUR DISPOSITIF ÉLECTRONIQUE INFORMATIF**

VERFAHREN ZUR BEREITSTELLUNG EINER ANZEIGEVORRICHTUNG FÜR EIN ELEKTRONISCHES INFORMATIONSGERÄT

METHOD FOR SUPPLYING A DISPLAY DEVICE FOR AN ELECTRONIC INFORMATION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**17.01.2018 Bulletin 2018/03**

(73) Titulaire: **Essilor International**
**94220 Charenton-le-Pont (FR)**

(72) Inventeurs:
• **LE SAUX, Gilles**
  **94227 CHARENTON-LE-PONT Cedex (FR)**
• **BOUCHIER, Aude**
  **94227 CHARENTON-LE-PONT CEDEX (FR)**
• **COLAS, Pauline**
  **94227 CHARENTON-LE-PONT CEDEX (FR)**

• **QUERE, Loïc**
  **94227 CHARENTON-LE-PONT CEDEX (FR)**
• **GUILLOT, Matthieu**
  **94227 CHARENTON-LE-PONT CEDEX (FR)**
• **CORNIER, Jean-Marc**
  **94227 CHARENTON-LE-PONT CEDEX (FR)**

(74) Mandataire: **Cabinet Novitech**
**188 Grande rue Charles de Gaulle**
**94130 Nogent-sur-Marne (FR)**

(56) Documents cités:
WO-A1-2015/150269    WO-A1-2015/158601
US-A1- 2008 273 246    US-A1- 2008 316 427
US-A1- 2010 045 927

**Description**

L'invention a pour objet un procédé de fourniture d'un dispositif d'affichage pour dispositif électronique informatif et un dispositif électronique informatif comportant un tel dispositif d'affichage.

Le domaine de l'invention est celui des dispositifs électroniques informatifs et notamment celui des dispositifs de réalité augmentée.

Il est connu de munir un être humain d'un équipement de vision en réalité augmentée lui permettant de voir simultanément l'environnement dans lequel il se trouve ainsi que des images ajoutées dans son champ de vision, augmentant ainsi la réalité perçue visuellement par l'utilisateur.

Un tel équipement comporte un écran semi-transparent, placé dans le champ de vision de l'utilisateur et sur lequel sont projetées les images de réalité augmentée. Cet écran est formé par exemple par le verre d'une paire de lunettes portées par l'utilisateur.

L'équipement peut être équipé de capteurs d'orientation permettant de déterminer la direction du regard de l'utilisateur, et notamment la position de la tête de celui-ci par rapport à l'environnement. Ainsi, les images superposées dans le champ de vision naturel de l'utilisateur sont positionnées en concordance avec l'environnement perçu visuellement par l'utilisateur.

Néanmoins, certains utilisateurs ont besoin de porter des verres ophtalmologiques afin de corriger des défauts de leur vue. Dans ce cas, un élément optique, tel qu'un verre ophtalmologique, est placé de sorte que les faisceaux lumineux d'un objet réel situé dans le champ de vision de l'utilisateur le traverse au moins une fois, l'image informative pouvant aussi éventuellement traverser aussi l'élément optique. L'ajout de ce verre va générer une modification des propriétés de l'objet réel, et éventuellement celles de l'image informative. Ces modifications peuvent être différentes entre l'objet réel et l'image virtuelle, ce qui peut être préjudiciable pour la perception par le porteur de superposition des images virtuelles avec l'objet réel.

Il est aussi préférable dans certains cas, même pour un porteur ne possédant pas de défaut visuel, d'encapsuler le dispositif d'affichage avec un élément optique situé en amont et un élément optique situé en aval du dispositif d'affichage, par exemple pour protéger le dispositif d'affichage ou pour fournir des fonctions optiques complémentaires (fonction photochromique, electrochromique, teinte, polarisation...) via les éléments optiques.

Ces éléments optiques s'ils ont une puissance non nulles, par exemple des puissances non nulles mais opposées entre l'élément optique amont et élément optique aval, vont de même modifier différemment les propriétés de l'objet réel et de l'image virtuelle.

De ce fait, il existe un besoin de fournir un dispositif électronique informatif adapté à un porteur et en particulier lorsque ce dispositif intègre un élément optique de puissance non nulle.

L'ordonnance du porteur est un ensemble de caractéristiques optiques, notamment de puissance optique et d'astigmatisme, déterminées par un ophtalmologiste afin de corriger les défauts de la vision de l'utilisateur, par exemple au moyen d'une lentille positionnée en face de son oeil. Par exemple, la prescription d'une lentille d'addition progressive comprend des valeurs de puissance optique et d'astigmatisme à un point de référence et, le cas échéant, une valeur d'addition. Des dispositifs électroniques informatifs conventionnels sont divulgués dans US 2008/273246 A1, US 2008/316427 A1, WO 2015/150269 A1, WO 2015/158601 A1 et US 2010/045927 A1.

Par conséquent, un objet de la présente invention est de proposer un procédé de fourniture d'un dispositif d'affichage pour dispositif électronique informatif adapté à un porteur, et notamment à la prescription d'un porteur.

A cet effet, l'invention a pour objet un procédé de fourniture d'un dispositif d'affichage tel que défini dans la revendication 1.

Avantageusement, le procédé permet de déterminer l'impact de l'élément optique sur l'image virtuelle, notamment sur les distances virtuelles perçues par le porteur, ie la distance d'affichage de l'image virtuelle, ou sur la taille perçue des objets virtuels affichés.

En outre, le dispositif d'affichage peut alors être modifié afin de compenser l'impact de l'élément optique sur l'image virtuelle de manière à ce que la perception de l'image réelle et la perception de l'image virtuelle soit simultanément bonne, notamment en termes de netteté et de taille des images.

Des modes de réalisation de l'invention sont définis dans les revendications dépendantes.

Un autre objet de l'invention concerne un dispositif électronique informatif tel que défini dans la revendication 10.

D'autres caractéristiques et avantages de la présente invention apparaitront à la lecture de la description et des figures suivantes :

- la figure 1 illustre un dispositif électronique informatif selon un mode de réalisation de l'invention,
- la figure 2 représente un organigramme des étapes d'un procédé de fourniture d'un dispositif d'affichage pour un dispositif électronique informatif selon un mode de réalisation de l'invention, et
- la figure 3 illustre un exemple de réalisation de l'invention dans lequel un dispositif électronique informatif selon l'invention comporte trois guides d'onde pouvant générer des distances virtuelles différentes pour afficher l'image..

Il est à noter que ces dessins n'ont d'autre but que d'illustrer le texte de la description et ne constituent en aucune sorte une limitation de la portée de l'invention.

Sur les différentes figures, les éléments analogues sont désignés par des références identiques.

L'invention se rapporte au domaine des dispositifs électroniques informatifs destinés à afficher une image virtuelle à un utilisateur et notamment aux dispositifs de réalité augmentée.

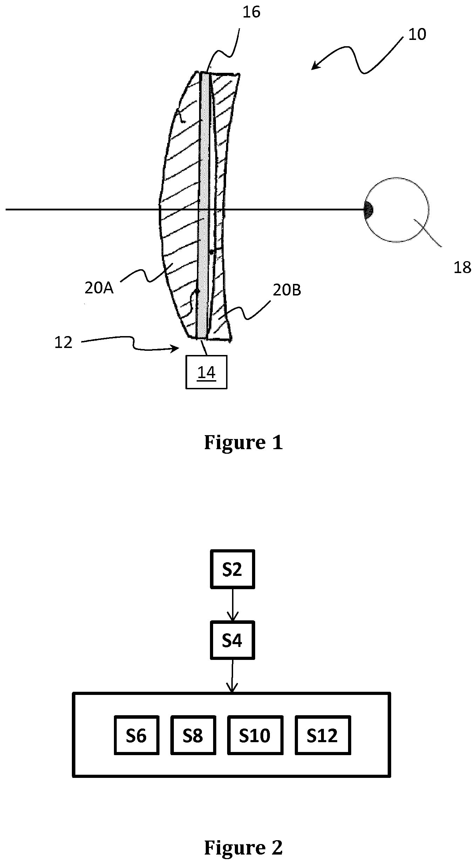

Notamment, et en regard de la figure 1, un tel dispositif électronique informatif 10 selon l'invention comporte un dispositif d'affichage 12 comprenant une source lumineuse 14 et un achemineur 16 destiné à acheminer des faisceaux optiques émis par la source lumineuse 14 vers au moins un oeil 18 d'un utilisateur pour permettre la visualisation d'une image virtuelle.

De préférence, le dispositif d'affichage comprend un achemineur du type à optique guidée ou un achemineur en espace libre.

Selon un autre exemple le dispositif d'affichage comprend un afficheur plénoptique.

Le dispositif électronique informatif 10 comporte en outre au moins un élément optique 20 ayant une puissance optique non nulle et destiné à être agencé devant l'oeil de l'utilisateur destiné à recevoir les faisceaux optiques émis par la source lumineuse 14. Sur la figure 1, deux éléments optiques sont illustrés. Le premier dit élément optique arrière 20B est placé entre l'oeil 18 de l'utilisateur et le dispositif d'affichage 12 et le second dit élément optique avant 20A est placé de sorte que le dispositif d'affichage 12 soit placé entre les deux éléments optiques 20A et 20B.

La puissance optique des éléments optiques dépend d'au moins une partie de la prescription de l'utilisateur. Seul un des deux éléments optiques peut dépendre d'au moins une partie de la prescription de l'utilisateur.

En outre, la puissance optique de l'élément optique comprend avantageusement la puissance sphérique et/ou cylindrique et/ou prismatique.

De préférence, l'élément optique 20 est un verre optique ayant un design unifocal et/ou progressif. L'élément optique 20 peut être également être un verre actif.

De plus, l'élément optique peut être un verre optique dont l'une des surfaces est sphérique.

Selon l'invention, l'image virtuelle a un paramètre de valeur prédéterminée et le dispositif d'affichage a un paramètre d'affichage dont la valeur dépend d'au moins une puissance optique en un point de l'élément optique et de la valeur du paramètre de l'image virtuelle.

De préférence, le paramètre de l'image virtuelle est :

- la distance selon une orientation d'affichage de l'image virtuelle,
- la position de l'image virtuelle, ou
- la taille de l'image virtuelle.

De préférence, le paramètre d'affichage du dispositif d'affichage est :

- la position de l'image à afficher, par exemple en coordonnées pixels,
- la taille de l'image à afficher, par exemple en nombre de pixels, ou
- un plan de mise au point du dispositif d'affichage.

La valeur du paramètre d'affichage du dispositif d'affichage est déterminée par un procédé selon l'invention tel qu'il va être décrit par la suite.

Ainsi, un tel dispositif électronique informatif selon l'invention est adapté pour de prendre en compte les modifications apportées par le ou les éléments optiques en termes de prisme, puissance, aberrations... sur l'image virtuelle.

Un procédé de fourniture d'un tel dispositif d'affichage pour dispositif électronique informatif destiné à afficher une image virtuelle à un utilisateur selon l'invention va maintenant être décrit en référence à la figure 2.

Le procédé comporte une étape S2 de fourniture d'une valeur d'un paramètre de l'image virtuelle, suivie d'une étape S4 de détermination d'une valeur optimale d'un paramètre d'affichage du dispositif d'affichage à partir d'au moins une puissance optique en un point du ou des éléments optiques 20A, 20B et de la valeur du paramètre de l'image virtuelle.

Au cours de l'étape S2, une valeur d'un paramètre de l'image virtuelle est fournie.

De préférence, le paramètre de l'image virtuelle est :

- la distance selon une orientation d'affichage de l'image virtuelle,
- la position de l'image virtuelle, ou
- la taille de l'image virtuelle.

Au cours de l'étape S4, une valeur optimale d'un paramètre d'affichage du dispositif d'affichage 12 est déterminée à partir d'au moins une puissance optique en un point du ou des éléments optiques et de la valeur du paramètre de l'image virtuelle.

La puissance optique d'au moins un des éléments optiques du dispositif électronique informatif dépend d'au moins une partie de la prescription de l'utilisateur. Avantageusement, la puissance optique de l'élément optique comprend la puissance sphérique et/ou cylindrique et/ou prismatique.

De préférence, le paramètre d'affichage du dispositif d'affichage est :

- la position de l'image à afficher, par exemple en coordonnées pixels,
- la taille de l'image à afficher, par exemple en nombre de pixels, ou
- un plan de mise au point du dispositif d'affichage.

Selon l'invention le procédé comporte en outre une étape S6 de fourniture d'un achemineur ayant au moins un paramètre intrinsèque unique dont la valeur est égale à la valeur optimale déterminée.

Selon un autre mode de réalisation, l'achemineur 16 du dispositif d'affichage 12 a un paramètre intrinsèque réglable. Selon ce mode de réalisation, le procédé comporte en outre une étape S8 d'ajustement du paramètre intrinsèque de l'achemineur 16 à la valeur optimale déterminée.

Le paramètre intrinsèque de l'achemineur 16 peut être réglable de façon continue ou discrète, c'est-à-dire comporter une pluralité de valeurs prédéterminées. Dans ce dernier cas, le paramètre intrinsèque de l'achemineur 16 est ajusté à une des valeurs prédéterminées de sorte que la différence entre cette valeur et la valeur optimale déterminée soit minimale.

Dans le cas où le paramètre intrinsèque de l'achemineur 16 est réglable de façon continue, de préférence si l'achemineur comporte un système de renvoi ajustable des faisceaux optiques vers l'oeil de l'utilisateur, l'étape S8 d'ajustement du paramètre intrinsèque de l'achemineur 16 à la valeur optimale déterminée comporte une étape d'ajustement du système de renvoi de manière à ce que la valeur du paramètre intrinsèque de l'achemineur soit égale à la valeur optimale déterminée.

Ce système de renvoi peut être ajustable de façon fixe ou active. Par exemple, le système de renvoi ajustable de façon fixe peut être un miroir enregistré holographiquement ou des éléments diffractifs tenant compte des corrections dues aux effets de l'élément optique 20 sur l'image virtuelle à afficher. Un système de renvoi ajustable de façon active est par exemple un miroir holographique actif ou un élément diffractif actif tenant compte des corrections dues aux effets de l'élément optique 20 sur l'image virtuelle à afficher.

Selon un autre mode de réalisation, le procédé comporte une étape S10 de sélection de l'achemineur 16 du dispositif d'affichage parmi une pluralité d'achemineurs, chaque achemineur ayant un paramètre intrinsèque unique. L'achemineur est alors choisi de sorte que la différence entre la valeur de son paramètre intrinsèque unique et la valeur optimale déterminée soit minimale.

Selon l'invention le dispositif d'affichage 12 comprend un second élément optique ayant une puissance optique et destiné à être traversé par les faisceaux optiques dirigés par l'achemineur 16 vers l'oeil 20 de l'utilisateur. En outre, l'achemineur a un paramètre intrinsèque.

Le procédé selon l'invention comporte une étape de détermination d'au moins une puissance optique du second élément optique en fonction de la valeur optimale du paramètre d'affichage du dispositif d'affichage et de la valeur du paramètre intrinsèque de l'achemineur.

Dans l'invention ce second élément optique dit élément correctif va compenser les effets de l'élément optique 20 du dispositif électronique informatif. Cet élément peut être fixe, par exemple un système optique calculé pour les effets de l'élément optique, ou variable, par exemple un système optique à base de lentilles à membranes, cristaux liquides, SLM... Un tel élément correctif variable permettrait de compenser les effets et d'ajouter des variations de distances de focalisation ou de position de l'image virtuelle en temps réel.

Avantageusement, le dispositif électronique informatif comporte un système de suivi de la direction du regard de l'oeil de l'utilisateur et la valeur optimale du paramètre d'affichage du dispositif d'affichage est alors également déterminée en fonction de la direction du regard de l'utilisateur.

Selon l'invention, le dispositif électronique informatif est un dispositif à réalité augmentée configuré pour afficher l'image virtuelle en superposition d'un objet réel.

Le dispositif électronique informatif comporte au moins un capteur configuré pour déterminer la valeur d'un paramètre de l'objet réel correspondant au paramètre de l'image virtuelle. Dans ce cas, la valeur du paramètre de l'image virtuelle fournie est égale à la valeur du paramètre de l'objet réel vu à travers l'élément optique déterminée par le capteur.

Avantageusement, le procédé selon l'invention peut comporter une étape de mise à jour de la puissance optique de l'élément optique. Dans ce cas, la valeur optimale du paramètre d'affichage du dispositif d'affichage est déterminée en outre à partir de la puissance optique mise à jour de l'élément optique.

Ainsi, un tel procédé selon l'invention permet de modifier l'affichage de l'image virtuelle pour prendre en compte les effets apportés par le ou les éléments optiques. Cette prise en compte comme indiqué précédemment peut être réalisée soit par ajout d'un élément dit correctif agencé de sorte à être traversé par les faisceaux optiques dirigés par l'achemineur vers l'oeil de l'utilisateur, soit directement via le système de renvoi éventuel de l'image vers l'oeil, soit directement via l'afficheur en utilisant par exemple un afficheur dit « intelligent » de type SLM en phase, afficheur plénoptique (LFD) ou par correction des fichiers à afficher pour les cas simples en utilisant un écran classique du type OLED, LCD, projecteur..., ou encore en associant ces deux méthodes.

Tous ces modes de réalisation peuvent être mis en oeuvre individuellement ou en association, chaque élément prenant en compte toute ou partie de la correction de l'image virtuelle.

Selon un exemple, le dispositif de renvoi de l'image peut conserver des corrections bien caractérisées et fixes (corrections liées à la géométrie du système, corrections visuelles principales (myopie, astigmatisme, etc...) par exemple) et d'autres corrections peuvent être réalisées via l'afficheur.

Selon un autre exemple, il est possible de corriger via le dispositif de renvoi vers l'oeil la vision de loin (VL) tandis que l'afficheur pourra apporter les additions dans le cas de l'utilisation d'une lentille progressive ou de l'affichage d'une image en vision de près (VP). Si la myopie du porteur ne varie pas ou très peu, mais que sa vision de près évolue, ceci pourrait être suffisant pour lui garantir une bonne vision de l'image virtuelle, sans influencer sa vision du monde réel.

Grâce à des éléments actifs, on peut avantageusement réaliser un suivi de la correction de l'image virtuelle. Le porteur peut alors agir sur cette correction, via un terminal du type tablette ou smartphone, par exemple, pour améliorer sa vision de l'image virtuelle si nécessaire. Dans ce cas, le dispositif électronique informatif pourra être mis à jour et ainsi amélioré de façon continue grâce à un apprentissage, du suivi de l'évolution de la prescription d'un porteur, etc...

Des exemples de réalisation de l'invention vont maintenant être présentés en considérant un dispositif électronique informatif comportant un guide d'onde pouvant générer des distances virtuelles différentes pour afficher l'image, de manière continue ou discrète et sur lequel au moins un élément optique passif de puissance non nulle est collé.

## Cas A : Modification de la distance d'affichage de l'image virtuelle

Dans cet exemple le dispositif électronique informatif est destiné à un porteur emmétrope et comporte un dispositif d'affichage du type à optique guidée et un élément optique de puissance non nulle collé sur la face avant de l'achemineur et un autre élément optique de puissance opposée collé en face arrière. Ainsi la puissance optique réelle est nulle, le monde réel est perçu net et les propriétés de l'objet réel ne sont pas modifiées par le dispositif électronique informatif du fait de l'absence de puissance. A contrario, les propriétés de l'image virtuelle sont modifiées par l'élément optique collé en face arrière, car le porteur perçoit une image virtuelle qui traverse cet élément optique. L'image virtuelle est ainsi modifiée sur la distance perçue par l'utilisateur, sur sa taille, et éventuellement sa position. Ainsi, si on souhaite afficher une image virtuelle dont la position, la taille, ou la distance sont liées à l'objet réel observé, le porteur en l'absence de mise en oeuvre de l'invention percevra une image virtuelle à une position, taille, ou distance inadéquate.

On propose dans la suite de modifier le paramètre d'affichage relatif au plan de mise au point, de manière à ce qu'image virtuelle soit à une distance qui corresponde à la distance de l'objet réel visualisé, ce qui lui permettra de voir net à la fois l'objet réel et l'image virtuelle.

Si la puissance de l'élément optique arrière vaut Pwar (en Dioptrie) et que le dispositif doit afficher une image virtuelle à une proximité Pprox (=1/D avec D la distance d'affichage de l'objet virtuel), il faut :

$$\text{Pimage} = \text{Pprox} - \text{Pwar} \quad (1a)$$

$$\text{Pimage} = \text{Pprox} + \text{Pwav} \quad (1b)$$

où Pimage est la proximité de l'image virtuelle générée par l'affichage en l'absence de l'élément optique en face arrière. Bien entendu, un calcul exact de Pimage par tracé de rayon est également envisageable.

Ainsi, si Pwar = -1D et Pprox=0, ie un objet virtuel à l'infini, on obtient Pimage=1D, ie une image virtuelle positionnée à 1m derrière l'écran et le porteur perçoit nettes en vision de loin les images virtuelle et réelle simultanément. La proximité Pprox correspond ici à la proximité de l'image virtuelle perçue par l'utilisateur. Cette valeur peut être choisie en fonction des applications ou des usages du porteur. Par exemple, si le porteur souhaite une distance virtuelle adaptée à la lecture en vision de près à 40cm, une valeur de proximité Pprox adaptée peut être de -2.5D. Ainsi, l'image virtuelle et l'objet réel (un livre par exemple) seront vus nets simultanément. Pour une activité sollicitant la vision de loin (conduite par exemple), une valeur de Proximité de l'image virtuelle Pprox=0D est adaptée, ce qui correspond à la proximité d'un objet réel situé loin devant le conducteur.

Dans le cas d'un dispositif d'affichage à variation continue de distance, on règle alors Pimage à la valeur exacte, sinon on choisit parmi les valeurs discrètes celle se rapprochant de la valeur Pimage souhaitée.

En alternative, on règle la distance Pimage de manière à ce qu'elle ne soit pas supérieure de plus de 2D de la valeur Pimage souhaitée afin de limiter l'accommodation.

En alternative, dans le cas où le dispositif ne présente qu'une seule valeur Pimage ou un nombre limité de valeurs de Pimage, le dispositif d'affichage peut être fabriqué en conséquence ou sélectionné en fonction de Pwav afin de respecter les relations ci-dessus 1a, 1b.

Alternativement, en fonction du jeu de dispositifs d'affichage disponibles, les caractéristiques d'un élément optique correctif destiné à être collé en face avant peuvent être déterminées afin d'avoir une netteté simultanée de l'objet réel et de l'image virtuelle.

Si l'élément optique a de l'astigmatisme alors Pwav est une fonction de l'angle et la puissance Pimage du dispositif d'affichage sera modifiée en fonction de l'orientation θ.

Dans le cas d'un afficheur en espace libre, les formules (1a) et (1b) ne sont plus valables, car l'image virtuelle traverse 2 fois l'élément optique arrière avant d'atteindre l'oeil. En première approximation, on peut donc considérer que la puissance vue par l'afficheur vaut 2Pwar et appliquer la formule suivante : Pimage = Ppercue - 2.Pwar (1c).

### *Cas B : Modification en fonction de la réfraction*

Dans les deux exemples simplifiés suivants, le porteur est dépourvu d'astigmatisme.

#### Cas d'un dispositif d'affichage du type à optique guidée

Dans le cas où le porteur possède une certaine réfraction qui n'est pas entièrement supporté par l'élément optique arrière, alors le porteur ne verra pas net simultanément l'objet réel pour lequel sa réfraction est compensée et l'image virtuelle. Le défaut de correction de l'image virtuelle est égal à la puissance de l'élément optique avant et peut être compensé en modifiant la distance de l'image virtuelle, par exemple :

- si on veut voir net simultanément un objet réel à l'infini et l'image virtuelle Pprox = 0D ; et
- si on veut voir net simultanément un objet réel à 33cm et l'image virtuelle, Pprox = -3D,

avec Pprox la proximité de l'image virtuelle, c'est-à-dire la distance entre le verre et un plan réel pour lequel l'image virtuelle et l'objet réel sont vus nets simultanément.

Pimage est déterminée par les relations suivantes :

$$\text{Pimage} = \text{Pprox+Pwav (2a)} = \text{Pprox+Porteur-Pwar (2b)}$$

Ainsi le porteur est corrigé pour sa vision réelle et aussi pour sa vision virtuelle.

Tout comme pour l'exemple du cas A, on peut prendre la valeur exacte Pimage si on peut régler le dispositif d'affichage de manière continue, ou choisir une valeur la plus appropriée, ou choisir un dispositif d'affichage dans un jeu de dispositifs d'affichage pour avoir des valeurs les plus adaptées.

De même, le dispositif peut comprendre un élément optique correctif en face avant, le paramétrage de l'afficheur étant déterminé à partir de la puissance de l'élément optique avant.

#### Cas d'un afficheur en espace libre :

Dans le cas d'un afficheur en espace libre, les formules (2a) et (2b) ne sont plus valables, car l'image virtuelle traverse 2 fois l'élément optique arrière avant d'arriver à l'oeil. En première approximation, la puissance vue par l'afficheur vaut 2Pwar et la formule suivante est alors appliquée : Pimage = Pprox+Porteur-2xPwar (2c).

#### Cas d'un élément optique progressif en face arrière

Dans le cas où l'élément optique arrière présente une surface progressive, alors Pwar est une fonction de la direction de regard $(\alpha,\beta)$ et Pwar possède une puissance sphérique et un astigmatisme : PwarS$(\alpha,\beta)$ et PwarA$(\alpha,\beta)$. Les formules précédentes s'appliquent pour chaque direction de regard.

Il est ainsi possible de corriger l'image virtuelle de manière à ce que celle-ci soit vue nette, sans défaut d'astigmatisme, sur l'ensemble du champ $(\alpha,\beta)$, l'objet réel n'étant net que dans les zones de vision de loin, intermédiaire et de près.

### *Cas C : Modification de la taille et/ou de la position de l'image virtuelle*

Dans cet exemple, le porteur a une prescription non nulle. Le porteur voit le monde extérieur avec un effet de grandissement ou de compression suivant la puissance du verre (hypermétrope/myope). Cet effet est dû à la puissance du verre et à la distance verre-oeil, cette distance étant la distance entre l'œil et le dispositif électronique informatif.

$$\text{On a Gréel} = 1/(1-\text{DVO.Pporteur}) \quad (3)$$

avec DVO la distance verre-oeil, Pporteur la prescription du porteur (qui peut être une fonction de $\theta$ en cas de présence d'astigmatisme).

Par exemple, pour une DVO de 14mm, Pporteur=-1D (myope), le grandissement Gréel vaut 0,986.

Pour une image virtuelle positionnée à Pimage=0, on a :

$$\text{Gvirtuel} = 1/(1-\text{DVO.Pwar}) \quad (4)$$

Par exemple, pour Pwav= 2D et Pwar=-3D, le grandissement Gvirtuel vaut 0,96.

On a donc un grandissement différent pour l'image réelle et l'image virtuelle, ce qui génère des problèmes pour la réalité augmentée quand on souhaite superposer précisément une image virtuelle avec un objet réel.

Dans ce cas, la taille des objets virtuels est modifiée de manière à ce que les grandissements réels/virtuels soit identiques ou très proches. On peut appliquer un facteur de grandissement numérique sur l'image virtuelle, ou modifier la taille (en pixels) de l'image virtuelle pour réduire l'écart de grandissement entre les images réelle et virtuelle, sans compenser la totalité de cet écart.

Il est également possible de prendre en compte les effets prismatiques des éléments optiques puisque les effets prismatiques s'appliquant à l'image virtuelle et l'objet réel diffèrent, en particulier quand on s'éloigne de l'axe optique du système. En effet, ces effets prismatiques différents pour l'image virtuelle et l'objet réel impactent la qualité d'affichage pour de la réalité augmentée, car les positions des images virtuelles ne correspondent pas aux positions des objets réels à mettre en relief. Ces effets prismatiques s'ils ne sont pas corrigés peuvent également empêcher la fusion simultanée des images virtuels et des objets réels quand on utilise un système binoculaire. Pour réaliser cette correction, on peut alors modifier la position (en pixels) de l'image virtuelle. La détermination de la nouvelle position de l'image virtuelle peut être réalisée par une simulation de tracé de rayons, de manière à ce que la direction d'un rayon lumineux partant d'un objet réel et passant par l'oeil du porteur et la direction d'un rayon lumineux partant de l'afficheur à la position de l'image et passant par l'oeil du porteur soient identiques.

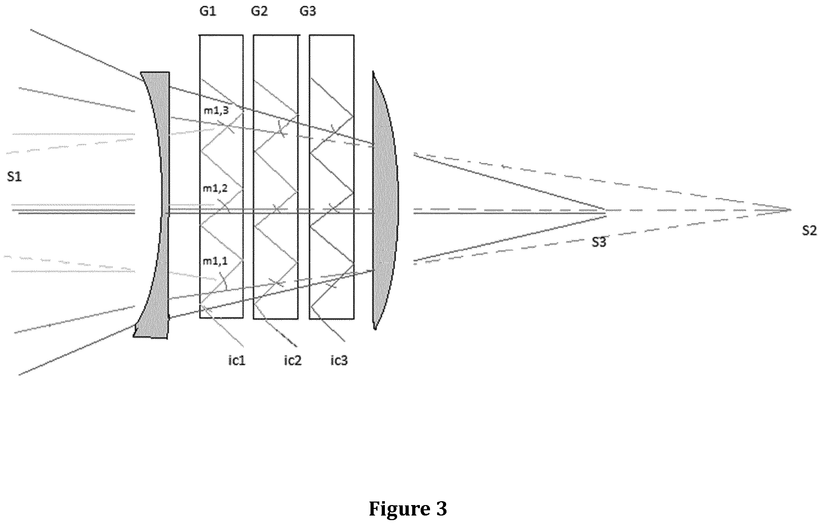

Un autre exemple de réalisation de l'invention va maintenant être présenté en regard de la figure 3 qui illustre un dispositif électronique informatif comportant une pluralité de guides d'onde pouvant générer des distances virtuelles différentes pour afficher l'image.

Dans l'exemple illustré, le dispositif électronique informatif comporte deux éléments optiques, chacun de puissance non nulle : un convexe en face avant, et un concave en face arrière. Les puissances optiques des éléments optiques sont de +1D et -1D, de sorte que le dispositif électronique informatif est prévu pour un oeil emmétrope (S=0D).

Le dispositif électronique informatif comporte 3 guides d'ondes notés G1 G2 G3, permettant d'afficher des images à des distances notées d1, d2, d3 positionnées en S1, S2, S3.

Ces guides d'ondes ont une zone d'injection d'image notées ic1, ic2 et ic3 pour « in coupling » en anglais. Les faisceaux lumineux se réfléchissent sur les parois des différents guides d'onde qui comportent chacun également des éléments d'extraction du faisceau lumineux, appelés « out coupling » en anglais et notés mi,j avec i l'indice du guide d'onde et j l'indice de l'élément. Ces éléments d'extraction permettent d'extraire une partie du faisceau lumineux guidé dans chaque guide d'onde, tout en permettant de déterminer l'orientation du faisceau de sortie ainsi que sa courbure.

De cette manière, les différents faisceaux extraits par les différents éléments d'extraction d'un même guide (m1,1 ; m1,2 ; m1,3 par exemple pour G1) convergent vers S1, et la courbure de la surface d'onde correspond à la distande d1. Ainsi, l'observateur voit un point lumineux positionné à une distance d1 en l'absence d'élément optique.

Ici, on a choisi d1=-1m, ce qui signifie que quand les faisceaux extrait de G1 passent à travers l'élément optique concave, ils sont refocalisés et donc le porteur voit un point lumineux situé à l'infini.

De même, les distances d2 et d3 sont déterminées pour prendre en compte l'effet de la puissance de l'élément optique arrière.

Les éléments d'extraction peuvent être des miroirs de type miroir de Fresnel à traitement partiellement réfléchissant encapsulés à l'intérieur du guide d'onde. Il peut s'agir aussi de miroirs holographiques, ce qui permet d'enregistrer chacun des miroirs à partir des caractéristiques de distance souhaitée via un enregistrement holographique standard et l'utilisation à l'intérieur du guide d'onde par exemple d'une résine photosensible. On peut donc dans ce cas programmer les afficheurs en fonctions de l'élément optique qui sera utilisé.

La figure 3 illustre les réflexions et extractions pour un exemple de faisceau de rayons parallèles couplé au guide d'onde. L'injection dans le guide d'onde n'est pas représenté ici, il peut s'agir des solutions décrites classiquement dans les brevets US2015016777 ou US 20140003762

On note que dans l'exemple illustré sur la figure 3, les courbures des miroirs varient : concave pour G1, convexe G2, convexe plus marqué pour G3, ainsi que les angles moyens de ces miroirs, de manière à assurer la convergence des faisceaux extraits vers les points S1, S2, S3.

## Revendications

1. Procédé de fourniture d'un dispositif d'affichage (12) pour dispositif électronique informatif (10) à réalité augmentée destiné à afficher une image virtuelle à un utilisateur en superposition d'un objet réel, l'image virtuelle ayant un paramètre de valeur prédéterminée, le dispositif électronique informatif comportant :

   - un élément optique (20) ayant une puissance optique non nulle et destiné à être agencé devant un oeil (18) d'un utilisateur, la puissance optique dépendant d'au moins une partie de la prescription de l'utilisateur,
   - au moins un capteur configuré pour déterminer la valeur d'un paramètre de l'objet réel correspondant au paramètre de l'image virtuelle,
   - un système de suivi de la direction du regard de l'oeil de l'utilisateur,
   le dispositif d'affichage comprenant une source lumineuse (14) et un achemineur (16) ayant un paramètre intrinsèque, l'achemineur étant destiné à acheminer des faisceaux optiques émis par la source lumineuse vers l'oeil de l'utilisateur pour permettre la visualisation de l'image virtuelle, la valeur du paramètre de l'image virtuelle fournie étant égale à la valeur du paramètre de l'objet réel vu à travers le dispositif électronique informatif déterminée par le capteur,
   le dispositif d'affichage comprenant en outre un second élément optique ayant une puissance optique et destiné à être traversé par les faisceaux optiques dirigés par l'achemineur vers l'oeil de l'utilisateur,
   le procédé comportant au moins les étapes suivantes :

      - une étape (S2) de fourniture d'une valeur d'un paramètre de l'image virtuelle ;
      - une étape (S4) de détermination d'une valeur optimale d'un paramètre d'affichage du dispositif d'affichage à partir d'au moins une puissance optique en un point de l'élément optique, de la valeur du paramètre de l'image virtuelle, et de la direction du regard de l'utilisateur, de manière à compenser l'impact de l'élément optique sur l'image virtuelle ;
      - une étape de modification du dispositif d'affichage afin de compenser l'impact de l'élément optique sur l'image virtuelle de manière que la perception de l'image réelle et la perception de l'image virtuelle soient simultanément bonnes ;
      - une étape (S6) de fourniture d'un achemineur ayant au moins un paramètre, dit paramètre intrinsèque, unique dont la valeur est égale à la valeur optimale déterminée ; et
      - une étape de détermination d'au moins une puissance optique du second élément optique en fonction de la valeur optimale du paramètre d'affichage du dispositif d'affichage et de la valeur du paramètre intrinsèque de l'achemineur.

2. Procédé selon la revendication 1, dans lequel le paramètre de l'image virtuelle est un paramètre choisi dans la liste consistant en la distance selon une orientation d'affichage de l'image virtuelle, la position de l'image virtuelle et la taille de l'image virtuelle.

3. Procédé selon la revendication 1 ou 2, dans lequel le paramètre d'affichage du dispositif d'affichage est un paramètre choisi dans la liste consistant en la position de l'image à afficher, par exemple en coordonnées pixels, de la taille de l'image à afficher, par exemple en nombre de pixels, d'un plan de mise au point du dispositif d'affichage.

4. Procédé selon l'une quelconque des revendications précédentes, dans lequel l'achemineur a un paramètre intrinsèque réglable, le procédé comporte en outre une étape d'ajustement du paramètre intrinsèque de l'achemineur à la valeur optimale déterminée.

5. Procédé selon la revendication précédente, dans lequel le paramètre intrinsèque réglable de l'achemineur comprend une pluralité de valeurs prédéterminées, et le paramètre intrinsèque de l'achemineur est ajusté à une des valeurs prédéterminées de sorte que la différence entre cette valeur et la valeur optimale déterminée soit minimale.

6. Procédé selon la revendication 4, dans lequel l'achemineur comporte un système de renvoi ajustable des faisceaux optiques vers l'oeil de l'utilisateur, et dans lequel l'étape d'ajustement du paramètre intrinsèque de l'achemineur comporte une étape d'ajustement du système de renvoi de manière à ce que la valeur du paramètre intrinsèque de l'achemineur soit égale à la valeur optimale déterminée.

7. Procédé selon l'une quelconque des revendications précédentes, comprenant une étape de sélection de l'achemineur du dispositif d'affichage parmi une pluralité d'achemineurs, chaque achemineur ayant un paramètre, dit paramètre intrinsèque, unique, l'achemineur est choisi de sorte que la différence entre la valeur de son paramètre intrinsèque unique et la valeur optimale déterminée soit minimale.

8. Procédé selon l'une quelconque des revendications précédentes, comportant une étape de mise à jour de la puissance optique de l'élément optique et dans lequel la valeur optimale du paramètre d'affichage du dispositif d'affichage est déterminée en outre à partir de la puissance optique mise à jour de l'élément optique.

9. Procédé selon l'une quelconque des revendications précédentes, dans lequel la puissance optique de l'élément optique comprend la puissance sphérique et/ou cylindrique et/ou prismatique.

10. Dispositif électronique informatif (10) à réalité augmentée destiné à afficher une image virtuelle à un utilisateur en superposition d'un objet réel, l'image virtuelle ayant un paramètre de valeur prédéterminée comprenant :

- un élément optique (20) ayant une puissance optique non nulle et destiné à être agencé devant un oeil (18) d'un utilisateur, la puissance optique dépendant d'au moins une partie de la prescription de l'utilisateur,
- au moins un capteur configuré pour déterminer la valeur d'un paramètre de l'objet réel correspondant au paramètre de l'image virtuelle,
- un système de suivi de la direction du regard de l'oeil de l'utilisateur,
un dispositif d'affichage comprenant une source lumineuse (14) et un achemineur (16) ayant un paramètre intrinsèque, l'achemineur étant destiné à acheminer des faisceaux optiques émis par la source lumineuse vers l'oeil de l'utilisateur pour permettre la visualisation de l'image virtuelle, le dispositif d'affichage comprenant en outre un second élément optique ayant une puissance optique et destiné à être traversé par les faisceaux optiques dirigés par l'achemineur vers l'oeil de l'utilisateur,
la valeur du paramètre de l'image virtuelle étant égale à la valeur du paramètre de l'objet réel vu à travers le dispositif électronique informatif déterminée par le capteur, le dispositif d'affichage ayant un paramètre d'affichage dont la valeur dépend d'au moins une puissance optique en un point de l'élément optique, de la valeur du paramètre de l'image virtuelle et de la direction du regard de l'utilisateur de manière à compenser l'impact de l'élément optique sur l'image virtuelle, l'achemineur ayant au moins un paramètre, dit paramètre intrinsèque, unique dont la valeur est égale à la valeur du paramètre d'affichage, au moins une puissance optique du second élément optique étant déterminée en fonction de la valeur optimale du paramètre d'affichage du dispositif d'affichage et de la valeur du paramètre intrinsèque de l'achemineur.

**Patentansprüche**

1. Verfahren zum Bereitstellen einer Anzeigevorrichtung (12) für eine elektronische Informationsvorrichtung (10) mit erweiterter Realität zum Anzeigen eines virtuellen Bildes für einen Benutzer als Überlagerung eines realen Objekts, wobei das virtuelle Bild einen Parameter mit einem vorbestimmten Wert hat, wobei die elektronische Informationsvorrichtung Folgendes aufweist:

- ein optisches Element (20), das eine optische Leistung ungleich Null hat und dazu bestimmt ist, vor einem Auge (18) eines Benutzers angeordnet zu werden, wobei die optische Leistung von mindestens einem Teil der Sehilfeverordnung des Benutzers abhängt,
- mindestens einen Sensor, der so konfiguriert ist, dass er den Wert eines Parameters des realen Objekts ermittelt, der dem Parameter des virtuellen Bildes entspricht,
- ein System zur Verfolgung der Blickrichtung des Auges des Benutzers,
wobei die Anzeigevorrichtung eine Lichtquelle (14) und einen Weiterleiter (16) mit einem intrinsischen Parameter aufweist, wobei der Weiterleiter dazu dient, von der Lichtquelle emittierte optische Strahlen zum Auge des Benutzers zu leiten, um die Betrachtung des virtuellen Bildes zu ermöglichen, wobei der Parameterwert des bereitgestellten virtuellen Bildes gleich dem Parameterwert des durch die elektronische Informationsvorrichtung betrachteten realen Objekts ist, der durch den Sensor ermittelt wird,
wobei die Anzeigevorrichtung darüber hinaus ein zweites optisches Element mit einer optischen Leistung aufweist, das dazu bestimmt ist, von den optischen Strahlen, die von dem Weiterleiter auf das Auge des Benutzers gerichtet werden, durchquert zu werden,
wobei das Verfahren mindestens die folgenden Schritte aufweist:

- einen Schritt (S2) zum Bereitstellen eines Werts eines Parameters des virtuellen Bildes;
- einen Schritt (S4) zum Ermitteln eines optimalen Werts eines Anzeigeparameters der Anzeigevorrichtung, ausgehend von mindestens einer optischen Leistung an einem Punkt des optischen Elements, dem Wert des Parameters des virtuellen Bildes und der Blickrichtung des Benutzers, um den Einfluss des optischen Elements auf das virtuelle Bild zu kompensieren;
- einen Schritt zum Modifizieren der Anzeigevorrichtung, um den Einfluss des optischen Elements auf das virtuelle Bild so zu kompensieren, dass die Wahrnehmung des realen Bildes und die Wahrnehmung des virtuellen Bildes gleichzeitig gut sind;
- einen Schritt (S6) zum Bereitstellen eines Weiterleiters mit mindestens einem Parameter, dem sogenannten intrinsischen Parameter, der einzigartig ist und dessen Wert gleich dem ermittelten optimalen Wert ist; und
- einen Schritt zum Ermitteln mindestens einer optischen Leistung des zweiten optischen Elements in Abhängigkeit von dem optimalen Wert des Anzeigeparameters der Anzeigevorrichtung und dem Wert des intrinsischen Parameters des Weiterleiters.

2. Verfahren nach Anspruch 1, wobei der Parameter des virtuellen Bildes ein Parameter ist, der aus der Liste ausgewählt wird, die aus dem Abstand entlang einer Anzeigeausrichtung des virtuellen Bildes, der Position des virtuellen Bildes und der Größe des virtuellen Bildes besteht.

3. Verfahren nach Anspruch 1 oder 2, wobei der Anzeigeparameter der Anzeigevorrichtung ein Parameter ist, der aus der Liste ausgewählt wird, die aus der Position des anzuzeigenden Bildes, z. B. in Pixelkoordinaten, der Größe des anzuzeigenden Bildes, z. B. in der Anzahl der Pixel, und einer Fokusebene der Anzeigevorrichtung besteht.

4. Verfahren nach einem der vorhergehenden Ansprüche, wobei der Weiterleiter einen einstellbaren intrinsischen Parameter hat und das Verfahren außerdem einen Schritt des Anpassens des intrinsischen Parameters des Weiterleiters an den ermittelten optimalen Wert aufweist.

5. Verfahren nach dem vorhergehenden Anspruch, wobei der einstellbare intrinsische Parameter des Weiterleiters eine Vielzahl von vorbestimmten Werten aufweist und der intrinsische Parameter des Weiterleiters so auf einen der vorbestimmten Werte eingestellt wird, dass die Differenz zwischen diesem Wert und dem ermittelten optimalen Wert minimal ist.

6. Verfahren nach Anspruch 4, wobei der Weiterleiter ein einstellbares Umlenksystem für die optischen Strahlen zum Auge des Benutzers aufweist, und wobei der Schritt des Einstellens des intrinsischen Parameters des Weiterleiters einen Schritt des Einstellens des Umlenksystems beinhaltet, so dass der Wert des intrinsischen Parameters des Weiterleiters gleich dem ermittelten optimalen Wert ist.

7. Verfahren nach einem der vorhergehenden Ansprüche, das einen Schritt zum Auswählen des Weiterleiters der Anzeigevorrichtung aus einer Vielzahl von Weiterleitern aufweist, wobei jeder Weiterleiter einen einzigartigen Parameter hat, den sogenannten intrinsischen Parameter, und der Weiterleiter so ausgewählt wird, dass die Differenz zwischen dem Wert seines einzigartigen intrinsischen Parameters und dem ermittelten optimalen Wert minimal ist.

8. Verfahren nach einem der vorhergehenden Ansprüche, das einen Schritt zum Aktualisieren der optischen Leistung des optischen Elements aufweist und bei dem der optimale Wert des Anzeigeparameters der Anzeigevorrichtung zusätzlich aus der aktualisierten optischen Leistung des optischen Elements ermittelt wird.

9. Verfahren nach einem der vorhergehenden Ansprüche, wobei die optische Leistung des optischen Elements die sphärische und/oder zylindrische und/oder prismatische Leistung beinhaltet.

10. Elektronische Informationsvorrichtung (10) mit erweiterter Realität zum Anzeigen eines virtuellen Bildes für einen Benutzer als Überlagerung eines realen Objekts, wobei das virtuelle Bild einen Parameter mit einem vorbestimmten Wert hat, die Folgendes aufweist:

- ein optisches Element (20), das eine optische Leistung ungleich Null hat und dazu bestimmt ist, vor einem Auge (18) eines Benutzers angeordnet zu werden, wobei die optische Leistung von mindestens einem Teil der Sehilfeverordnung des Benutzers abhängt,
- mindestens einen Sensor, der so konfiguriert ist, dass er den Wert eines Parameters des realen Objekts ermittelt, der dem Parameter des virtuellen Bildes entspricht,
- ein System zur Verfolgung der Blickrichtung des Auges des Benutzers, und
- eine Anzeigevorrichtung, die eine Lichtquelle (14) und einen Weiterleiter (16) mit einem intrinsischen Parameter aufweist, wobei der Weiterleiter dazu dient, von der Lichtquelle emittierte optische Strahlen zum Auge des Benutzers zu leiten, um die Betrachtung des virtuellen Bildes zu ermöglichen, wobei die Anzeigevorrichtung darüber hinaus ein zweites optisches Element mit einer optischen Leistung aufweist, das dazu bestimmt ist, von den optischen Strahlen, die von dem Weiterleiter auf das Auge des Benutzers gerichtet werden, durchquert zu werden, wobei der Parameterwert des virtuellen Bildes gleich dem Parameterwert des realen Objekts ist, das durch die elektronische Informationsvorrichtung gesehen wird, und der vom Sensor ermittelt wird, wobei die Anzeigevorrichtung einen Anzeigeparameter hat, dessen Wert von mindestens einer optischen Leistung an einem Punkt des optischen Elements, dem Wert des Parameters des virtuellen Bildes und der Blickrichtung des Benutzers abhängt, um den Einfluss des optischen Elements auf das virtuelle Bild zu kompensieren, wobei der Weiterleiter mindestens einen Parameter hat, den sogenannten intrinsischen Parameter, der einzigartig ist und dessen Wert gleich dem Wert des Anzeigeparameters ist, wobei mindestens eine optische Leistung des zweiten optischen Elements in Abhängigkeit von dem optimalen Wert des Anzeigeparameters der Anzeigevorrichtung und dem Wert des intrinsischen Parameters des Weiterleiters ermittelt wird.

**Claims**

1. Method for providing a display device (12) for an augmented reality electronic information device (10) intended to display to a user a virtual image superimposed on a real object, the virtual image having a parameter of predetermined value, the electronic information device including:

   - an optical element (20) having a nonzero optical power and intended to be positioned in front of an eye (18) of a user, the optical power depending on at least part of the user's prescription,
   - at least one sensor configured to determine the value of a parameter of the real object corresponding to the parameter of the virtual image,
   - a system for tracking the gaze direction of the eye of the user,
   the display device comprising a light source (14) and a guide element (16) having an intrinsic parameter, the guide element being intended to guide optical beams emitted by the light source to the eye of the user so as to allow viewing of the virtual image, the value of the parameter of the virtual image that is provided being equal to the value of the parameter of the real object seen through the electronic information device, which value is determined by the sensor,
   the display device furthermore comprising a second optical element having an optical power and intended to be passed through by the optical beams guided by the guide element to the eye of the user,
   the method including at least the following steps:

   - a step (S2) of providing a value of a parameter of the virtual image;
   - a step (S4) of determining an optimum value of a display parameter of the display device from at least one optical power at a point of the optical element, from the value of the parameter of the virtual image, and from the gaze direction of the user, so as to compensate the impact of the optical element on the virtual image;
   - a step of changing the display device in order to compensate the impact of the optical element on the virtual image, such that the perception of the real image and the perception of the virtual image are correct at the same time;
   - a step (S6) of providing a guide element having at least one parameter, called the unique intrinsic parameter, whose value is equal to the determined optimum value; and
   - a step of determining at least one optical power of the second optical element depending on the optimum value of the display parameter of the display device and on the value of the intrinsic parameter of the guide element.

2. Method according to Claim 1, wherein the parameter of the virtual image is a parameter chosen from the list consisting of the distance in a display orientation of the virtual image, the position of the virtual image and the size of the virtual image.

3. Method according to Claim 1 or 2, wherein the display parameter of the display device is a parameter chosen from the list consisting of the position of the image to be displayed, for example in pixel coordinates, the size of the image to be displayed, for example in number of pixels, a focal plane of the display device.

4. Method according to any one of the preceding claims, wherein the guide element has an adjustable intrinsic parameter, the method furthermore including a step of adjusting the intrinsic parameter of the guide element to the determined optimum value.

5. Method according to the preceding claim, wherein the adjustable intrinsic parameter of the guide element comprises a plurality of predetermined values, and the intrinsic parameter of the guide element is adjusted to one of the predetermined values, such that the difference between this value and the determined optimum value is minimal.

6. Method according to Claim 4, wherein the guide element includes an adjustable system for returning the optical beams to the eye of the user, and wherein the step of adjusting the intrinsic parameter of the guide element includes a step of adjusting the return system, such that the value of the intrinsic parameter of the guide element is equal to the determined optimum value.

7. Method according to any one of the preceding claims, comprising a step of selecting the guide element of the display device from among a plurality of guide elements, each guide element having a parameter, called the unique intrinsic parameter, the guide element being chosen such that the difference between the value of its unique intrinsic parameter and the determined optimum value is minimal.

8. Method according to any one of the preceding claims, including a step of updating the optical power of the optical element, and wherein the optimum value of the display parameter of the display device is furthermore determined from the updated optical power of the optical element.

9. Method according to any one of the preceding claims, wherein the optical power of the optical element comprises the spherical and/or cylindrical and/or prismatic power.

10. Augmented reality electronic information device (10) intended to display to a user a virtual image superimposed on a real image, the virtual image having a parameter of predetermined value, comprising:

- an optical element (20) having a nonzero optical power and intended to be positioned in front of an eye (18) of a user, the optical power depending on at least part of the user's prescription,
- at least one sensor configured to determine the value of a parameter of the real object corresponding to the parameter of the virtual image,
- a system for tracking the gaze direction of the eye of the user, and
a display device comprising a light source (14) and a guide element (16) having an intrinsic parameter, the guide element being intended to guide optical beams emitted by the light source to the eye of the user so as to allow viewing of the virtual image, the display device furthermore comprising a second optical element having an optical power and intended to be passed through by the optical beams guided by the guide element to the eye of the user, the value of the parameter of the virtual image being equal to the value of the parameter of the real object seen through the electronic information device, which value is determined by the sensor, the display device having a display parameter whose value depends on at least one optical power at a point of the optical element, on the value of the parameter of the virtual image and on the gaze direction of the user, so as to compensate the impact of the optical element on the virtual image,
the guide element having at least one parameter, called the unique intrinsic parameter, whose value is equal to the value of the display parameter, at least one optical power of the second optical element being determined depending on the optimum value of the display parameter of the display device and on the value of the intrinsic parameter of the guide element.

**Figure 1**

**Figure 2**

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008273246 A1
- US 2008316427 A1
- WO 2015150269 A1
- WO 2015158601 A1
- US 2010045927 A1
- US 2015016777 A
- US 20140003762 A